# EUROPÄISCHE PATENTSCHRIFT

(11) **EP 0 309 931 B1**
(45) Veröffentlichungstag und Bekanntmachung des Hinweises auf die Patenterteilung: **10.11.1993**
(21) Anmeldenummer: 88115655.8
(22) Anmeldetag: 23.09.1988
(51) Int. Cl.: B01D 19/04

(54) **Zur Verwendung in Wasch- und Reinigungsmitteln geeignetes Schaumregulierungsmittel**
Antifoaming agent suitable to the use in wash- and cleaning agents
Antimousse régulatrice apte à l'utilisation dans les lessives et les détergents

(30) Priorität: 30.09.1987 DE 3732947
(43) Veröffentlichungstag der Anmeldung: 05.04.1989
(73) Patentinhaber: Henkel Kommanditgesellschaft auf Aktien, 40191 Düsseldorf (DE)
(72) Erfinder: Schulz, Paul, Dr., D-5600 Wuppertal (DE); Härer, Jürgen, Dr., D-4000 Düsseldorf 13 (DE); Kurzendörfer, Claus-Peter, Dr., D-4000 Düsseldorf 13 (DE); Carduck, Franz-Josef, Dr., D-5657 Haan (DE); Diekötter, Friedrich Wilhelm, D-4018 Langenfeld (DE); Jahnke, Ulrich, Dr., D-4019 Monheim (DE); Schmadel, Edmund, Dr., D-5653 Leichlingen (DE)

(56) Entgegenhaltungen:
- EP-A- 0 150 386
- DE-A- 3 242 202
- DE-A- 3 505 742
- DE-B- 2 031 827

## Beschreibung

Die Aufgabe, die mit der vorliegenden Erfindung gelöst wird, ist die Bereitstellung eines Schaumregulierungsmittels, das in Wasch- und Reinigungsmitteln eingesetzt über einen breiten Temperaturbereich wirksam ist, d.h. im Kaltwaschbereich (20 bis 30 °C), bei mittleren Waschtemperaturen (40 bis 60 °C) und auch im Kochwaschbereich eine störende Schaumentwicklung unterdrückt. Weiterhin soll das Schaumregulierungsmittel im Gemisch mit üblichen Waschmittelbestandteilen lager- und wirkungsstabil bleiben und keine nachteiligen Auswirkungen auf das Behandlungsgut und die Umwelt ausüben.

Zur Verwendung in Waschmitteln geeignete Entschäumergemische auf der Basis von Paraffinen und Paraffingemischen einschließlich mikrokristalliner Paraffine sind bekannt. Um ihre Wirkung zu steigern und gleichzeitig die erforderliche Anwendungskonzentration herabzusetzen, werden diesen Entschäumern häufig weitere bekannte Schauminhibitoren zugesetzt, insbesondere Polysiloxane, Polysiloxan-Kieselsäure-Gemische oder von langkettigen Fettsäuren abgeleitete Bis-acyl-alkylendiamine (im folgenden kurz Bis-amide genannt). Nun sind jedoch Polysiloxane vergleichsweise aufwendig und besitzen den Nachteil, daß sie das Textilgut bzw. die Oberfläche der behandelten Gegenstände hydrophobieren und daß sie ferner weitgehend resistent gegen einen biologischen Abbau im Abwasser sind. Es bestand daher die weitere Aufgabe, hochwirksame Entschäumer zu entwickeln, die frei von Si-Polymeren sind.

Die Verwendung von Bis-amiden mit Paraffinen als Entschäumer für Waschmittel, ist bereits aus DE-A-20 43 087 bekannt. Die dort genannte Rezepturen besitzen jedoch noch nicht die gleichmäßige Entschäumerwirkung über einen großen Temperaturbereich. Weitere Bis-amide enthaltende Mittel sind aus EP 75 437 und ER 94 250 bekannt. Beide enthalten jedoch Silikone und kommen aus den bereits genannten Gründen nicht in Betracht. In ER 87 233 wird ein Verfahren zur Herstellung eines schwachschäumenden Waschmittels beschrieben, bei dem Gemische aus einer öligen beziehungsweise wachsartigen Substanz und Bis-amiden auf ein Trägerpulver, insbesondere ein sprühgetrocknetes tensidhaltiges Waschmittel aufgetragen wird. Die ölige beziehungsweise wachsartige Substanz kann z.B. aus Vaseline (petroleum jelly) mit einem Schmelzpunkt von 20 ° bis 120 °C, vorzugsweise 45 bis 65 °C bestehen. In den Beispielen wird für diesen Zweck Mineralöl eingesetzt. Eine weitergehende Differenzierung des wachsartigen Bestandteils erfolgt nicht. Ganz offensichtlich dient diese Komponente in erster Linie als Trägerbeziehungsweise Dispergiermittel für das Bis-amid. Die bei einem Einsatz von 2 Gewichtsprozent Entschäumergemisch, bezogen auf das Mittel, werden zwar nach dem Ross-Miles-Test befriedigende Werte erhalten, jedoch erscheinen diese Einsatzmengen für die Praxis viel zu hoch. Außerdem läßt sich zeigen, daß die Art der Konfektionierung, nämlich das Aufsprühen des Mittels auf das sprühgetrocknete, tensidhaltige Waschmittel sich nachteilig auf die Lagerbeständigkeit der Schaumregulierungskomponente auswirkt mit dem Ergebnis, daß deren Aktivität mit zunehmender Lagerzeit abnimmt.

Es sind noch eine Reihe weiterer Entschäumer bekannt, die Bis-amide als Bestandteile enthalten. Sie sind jedoch nicht speziell auf den Einsatz in Wasch- und Reinigungsmitteln abgestellt und weisen daher nicht das erwünschte Temperaturprofil auf. In der Regel enthalten sie Silicone und/oder Emulgatoren und weisen damit die geschilderten Nachteile auf. Als Beispiel für derartige Mittel seien genannt die gemäß DE 21 41 905, DE 21 48 638, DE 24 40 210, DE 25 49 193, DE 29 44 604, DE 30 08 952 und EP 56 160. Die Einsatzgebiete für diese Mittel sind die Papier-, Zucker- und Textilindustrie sowie das Entschäumen von Latices sowie von Bohr- und Schneidölemulsionen. Diese Bereiche sind mit den speziellen Anforderungen der Wasch- und Reinigungsmitttel nicht vergleichbar.

Die Erfindung, mit der die Aufgabenstellung gelöst und die geschilderten Nachteile vermieden wird, betrifft ein zur Verwendung in Wasch- und Reinigungsmitteln geeignetes, rieselfähiges Schaumregulierungsmittel, bestehend aus
(I) einen wasserlöslichen, körnigen, tensidfreien Trägermaterial und
(II) einem adsorbierten Entschäumergemisch, das frei ist von Siloxanpolymeren und emulgierend beziehungsweise dispergierend wirkenden Tensiden und ein homogenes Gemisch folgender Bestandteile darstellt:
   (a) 5 bis 60 Gewichtsprozent eines Weich- oder Hartparaffins beziehungsweise deren Gemisches, das ein wenig ausgeprägtes Kristallisationsverhalten zeigt,
   (b) 20 bis 90 Gewichtsprozent mikrokristallinen Paraffinwachses, wobei die nach der Differential-Thermo-Analyse (DTA) bestimmten Anteile an flüssigen Bestandteilen in dem Gemisch aus (a) und (b) bei -15 °C 0 %, bei 0 °C 0 % bis 5 %, bei 25 °C 2 % bis 25 %, bei 50 °C 20 % bis 80 %, bei 75 °C 80 % bis 100 % und oberhalb der 90 °C 100 % betragen sollen,
   (c) 5 bis 20 Gewichtsprozent eines von C₂₋₇-Diaminen und gesättigten C₁₂₋₂₂-Fettsäuren abgeleiteten Diamids, das in feinverteilter Form vorliegt und eine Teilchengröße von weniger als 50 µm aufweist, wobei mindestens 90 % der Teilchen kleiner als 30 µm sind,
   sowie das darin enthaltene Entschäumergemisch.

Das Trägermaterial (I) weist eine körnige Struktur auf und besteht aus wasserlöslichen, tensidfreien Verbindungen, in erster Linie aus anorganischen und/oder organischen Salzen, die zum Einsatz in Wasch- und Reinigungsmitteln geeignet sind. Beispiele hierfür sind wasserlösliche, neutrale, schwachsauer oder schwach alkalisch reagierende Alkalimetallsalze, wie Natriumsulfat, Natriumbicarbonat, Natriumborate, Natriumhydrogen-phosphat, Natriumhydrogenpyrophosphat sowie Gemische der vorgenannten Salze. Auch die entsprechenden Kaliumsalze sind geeignet. Geringe Anteile an alkalisch reagierenden Salzen, welche die Alkalität nicht wesentlich erhöhen, können mitverwendet werden, z. B. Polyphosphate (Natriumtripolyphosphat), Natriumcarbonat und Natriumsilikat (Wasserglas). Als organische Salze kommen z. B. die Acetate, Tartrate, Succinate, Carboxymethylsuccinate sowie die Salze von Aminopolycarbonsäuren, wie NTA oder EDTA, Hydroxyalkanphosphonate und Aminoalkanpolyphosphonate in Frage, wie 1-Hydroxyethan-1,1-diphosphonat, Ethylendiaminotetramethylenphosphonat und Diethylentriamin-pentamethylenphosphonat in Frage. Brauchbar sind ferner Polymere, wie Celluloseether und Salze von polymeren beziehungsweise copolymeren Carbonsäuren. Gemische aus anorganischen und organischen Salzen können vielfach mit Vorteil verwendet werden. Der pH-Wert der Salze und Salzgemische soll in 1 %iger wäßriger Lösung weniger als 10, vorzugsweise 5 bis 9 und insbesondere 6 bis 8,5 betragen. Stärker alkalische Trägerstoffe führen zu allmählichem Wirkungsverlust.

Vorzugsweise liegt das Trägermaterial in einer Form vor, in der die Körner eine lockere, poröse Struktur aufweisen. Eine solche Struktur kann durch Sprühtrocknen einer Salzlösung erzielt werden. Derartige sprühgetrockneten Trägerkörner weisen im allgemeinen eine Korngröße von 0,1 bis 1,6, vorzugsweise von 0,2 bis 0,8 mm auf und enthalten weniger als 1 % an Staubanteilen. Diese werden, ebenso wie Grobanteile, vorzugsweise abgetrennt. Das Schüttgewicht geeigneter Trägerkörner liegt im Bereich von 200 bis 700 g/l, vorzugsweise von 300 bis 600 g/l (Gramm pro Liter).

Die Trägerkörner können außer wasserlöslichen Salzen auch gewisse Anteile an wasserunlöslichen, jedoch in Wasser dispergierbaren Adsorptionsmitteln enthalten, wie gefällte oder pyrogene Kieselsäure oder feinteilige Tone. Ihr Anteil soll jedoch so bemessen sein, daß der Zerfall der Trägerkörner in kaltem oder mäßig warmem Wasser und die Freigabe des Entschäumers nicht wesentlich behindert wird und bei entsprechender mechanischer Einwirkung, sowie es üblicherweise in einer Waschmaschine gegeben ist, nach längstens 2 bis 5 Minuten beendet ist.

Als gut geeignet haben sich Trägerkörner erwiesen, die aus sprühgetrocknetem Natriumsulfat (sogen. Leichtsulfat) bestehen. Durch Mitverwendung von Natriumsilikat (Natriumwasserglas) in Anteilen bis zu 10 %, vorzugsweise bis 4 %, kann die Kernstruktur und Abriebfestigkeit noch verbessert werden. Dieses Trägermaterial bietet darüberhinaus den Vorteil, daß die Rezeptur des Waschmittels, insbesondere hinsichtlich pH-Wert und Phosphatgehalt, nicht beeinflußt wird.

Die in dem Entschäumergemisch (II) enthaltenen Paraffinwachse stellen im allgemeinen komplexe Stoffgemische ohne scharfen Schmelz- oder Erstarrungspunkt dar. Man bestimmt ihren Schmelzbereich durch Differential-Thermo-Analyse (siehe Zeitschrift "The Analyst" 87 (1962), Seite 420 - 434.

Als Komponente (a) eignen sich Weich- und Hartparaffine sowie deren Gemische, die ein wenig ausgeprägtes Kristallisationsverhalten zeigen und im allgemeinen einen Erweichungs- und Schmelzbereich zwischen 10 ° bis 60 °C, vorzugsweise 20 ° bis 55 °C aufweisen. Derartige Paraffine und Paraffingemische sind z.B. unter der Bezeichnung Petrolatum, Vaseline sowie Hartbeziehungsweise Tafelparaffine im Handel. Bei der Auswahl der Paraffinfraktionen beziehungsweise der aus einzelnen Paraffinfraktionen zusammengesetzten Mittel ist darauf zu achten, daß innerhalb der angegebenen und durch DTA bestimmten Temperaturbereiche sowohl noch festes als auch flüssiges Material vorliegt. Man erreicht dies beispielsweise durch Auswahl geeigneter Paraffinfraktionen beziehungsweise durch Mischen entsprechender Anteile an halbfesten Weichparaffinen und Hartparaffinen. Geeignete Gemische enthalten z.B. 1 bis 3 Gewichtsteile Weichparaffin (Vaseline) mit einem Erweichungs- und Schmelzbereich von 25 ° bis 42 °C, vorzugsweise 30 ° bis 40 °C und 3 bis 1 Gewichtsteilen Hartparaffin (Tafelparaffin) vom Erweichungs- und Schmelzbereich von 40 ° bis 60 °C, vorzugsweise 42 ° bis 55 °C.

Der Anteil der Komponente (a) an dem Entschäumergemisch (II) beträgt im allgemeinen 5 bis 60, vorzugsweise 20 bis 50 Gewichtsprozent.

Als Komponente (b) kommen bekannte mikrokristalline Paraffinwachse in Frage, die einen Schmelzbereich von 55 ° bis 90 °C, vorzugsweise von 60 ° bis 80 °C aufweisen. Derartige mikrokristalline Wachse sind z. B. Bestandteil von Montanwachsen beziehungsweise hochschmelzenden Erdölfraktionen (Ceresin) und zeichnen sich durch einen Gehalt an verzweigten und cyclischen Paraffinen aus. Ihr Anteil an dem Entschäumergemisch beträgt im allgemeinen 20 bis 90 Gewichtsprozent, vorzugsweise 25 bis 60 Gewichtsprozent.

Art und Menge der Bestandteile (a) und (b) sollen im Rahmen der angegebenen Parameter so ausgewählt werden, daß die nach der Differential-Thermo-Analyse (DTA) bestimmten Anteile zu festen und flüssigen Bestandteile in dem Wachsgemisch in Abhängigkeit von der Temperatur vorzugsweise die folgende Verteilung zeigen:

| °C | flüssig | fest |
|---|---|---|
| 0 ° | 0 - 2 % | 100 - 98 % |
| 25 ° | 2 - 15 % | 98 - 85 % |
| 50 ° | 30 - 70 % | 70 - 30 % |
| 75 ° | 95 - 99 % | 1 - 5 % |
| 80 ° | 100 % | 0 |

Die obige Verteilung berücksichtigt die Tatsache, daß auch solche Paraffingemische, die bei Raumtemperatur fest erscheinen beziehungsweise nicht fließen, gewisse Anteile an flüssigen Paraffinen enthalten.

Komponente (c) besteht aus Bis-amiden, die sich von gesättigten Fettsäuren mit 12 bis 22, vorzugsweise 14 bis 18 C-Atomen sowie von Alkylendiaminen mit 2 bis 7 C-Atomen ableiten. Geeignete Fettsäuren sind Laurin-, Myristin-, Stearin-, Arachin- und Behensäure sowie deren Gemische, wie sie in natürlichen Fetten beziehungsweise gehärteten fetten Ölen, wie Talg oder hydriertem Palmöl, enthalten sind. Geeignete Diamine sind beispielsweise Ethylendiamin 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bis-amide sind Bis-myristoyl-ethylendiamin, Bis-palmitoyl-ethylendiamin, Bis-stearoyl-ethylendiamin und deren Gemische sowie die entsprechenden Derivate des Hexamethylendiamins.

Die Bis-amide, die in dem Paraffingemisch nicht löslich sind, müssen in feinverteilter Form vorliegen und eine Korngröße von weniger als 50 µm aufweisen, wobei mindestens 90 % der Partikel eine Korngröße von weniger als 30 µm besitzen sollen. Vorzugsweise liegt die maximale Korngröße der Partikel unter 20 µm, wobei mindestens 50 %, insbesondere mindestens 75 % der Partikel kleiner als 10 µm sind. Diese Angaben hinsichtlich der Partikelgröße beziehen sich auf die bekannte Bestimmungsmethode mit dem "Coulter Counter".

Die Herstellung des Entschäumungsgemisches (II) kann in dieser Weise erfolgen, daß man in eine Schmelze der Bestandteile (a) und (b) das feinteilige Bis-amid (Komponente c) einträgt und durch intensives Vermischen darin homogenisiert. Die Schmelze sollte dazu eine Temperatur von mindestens 90 °C und höchstens 200 °C aufweisen. Vorzugsweise beträgt die Temperatur 100 ° bis 150 °C. Wesentlich für eine gute Wirksamkeit des Entschäumers ist das Vorliegen einer stabilen Dispersion der Bis-amid-Teilchen in der Paraffinmatrix, was durch eine der Erfindungsdefinition entsprechende Teilchengröße bewirkt wird. Zwecks Erzielung dieses Dispersionszustandes kann man ein Bis-amid einsetzen und dispergieren, das von vorneherein die entsprechende Teilchengröße aufweist oder man verwendet ein grobteiligeres Ausgangsmaterial und unterwirft die Schmelze einer Mahlbehandlung mittels Kolloidmühlen, Zahnmühlen oder Kugelmühlen, bis die erwünschte Teilchengröße erreicht ist. Hierbei handelt es sich um eine bevorzugte Arbeitsweise.

Auch ein vollständiges Aufschmelzen der Bis-amide in der Paraffinschmelze und anschließendes schnelles Abkühlen auf Temperaturen unterhalb des Erstarrungspunktes der Bis-amide unter gleichzeitigem Homogenisieren der Schmelze kann zu einer entsprechend feinen Kornverteilung der Bis-amide führen. Bei der Wahl der Schmelztemperatur ist zu berücksichtigen, daß der nach der DTA bestimmte Schmelzbereich von technischem Bis-stearoyl-ethylendiamin in der Paraffinschmelze etwa im Bereich von 123 bis 137 °C und der von Bis-stearoylhexamethylendiamin im Bereich von 132 bis 141 °C liegt. Für die entsprechenden Bis-myristoyl-amide liegen die jeweiligen Temperaturbereiche bei 119 bis 135 °C und 130 bis 138 °C. Unterhalb des Erstarrungsbereiches sind die Bis-amide in der Paraffinschmelze praktisch unlöslich.

Überraschenderweise wurde gefunden, daß Gemische mit besonders hoher Entschäumerwirkung erhalten werden, wenn man nicht die Bis-amide selbst, sondern die zu ihrer Herstellung benötigten Ausgangsstoffe, d. h. die Diamine und Fettsäuren bzw. deren funktionellen Derivate in der Paraffinschmelze dispergiert und durch geeignete Reaktionsführung zu den Bis-amiden umsetzt. Als funktionelle Derivate kommen z. B. die Anhydride, Chloride, Bromide oder Ester, z. B. die Methylester in Frage. Das Molverhältnis von Diamin zu Fettsäure kann zwischen 1 : 1,5 bis 1 : 2,2, vorzugsweise 1 : 1,8 bis 1 : 2 betragen. Ein Überschuß eines der Reaktionspartner kann ohne Nachteile im Gemisch verbleiben.

Die Amidierungsreaktion kann durch Zusatz geeigneter Katalysatoren beschleunigt werden. Sofern freie Fettsäuren eingesetzt werden, eignen sich vorzugsweise acide Katalysatoren, wie p-Toluolsulfonsäure oder Hydroxybenzosulfonsäure. Der Anteil des Katalysators beträgt zweckmäßigerweise 2 bis 12 Mol%, bezogen auf Mol herzustellendes Bis-amid. Überraschenderweise wurde festgestellt, daß die Entschäumerwirkung des Endproduktes mit steigender Katalysatormenge tendenziell zunimmt. Dies ist möglicherweise auf die Bildung von Nebenprodukten unter Einbeziehung des Katalysators zurückzuführen ist, die in dem Entschäumergemisch verbleiben. Vorzugsweise beträgt der Anteil des Katalysators 3 bis 10 Mol%, bezogen auf Bis-amid.

Die Umsetzung erfolgt bei erhöhten Temperaturen, z. B. bei 100 bis 150 °C unter gleichzeitigem Durchmischen des Reaktionsgutes und Abdestillieren des entstehenden Reaktionswasser oder der sonstigen flüchtigen Reaktionsprodukte, wie Methanol bei Einsatz von Fettsäuremethylestern. Durch Einleiten inerter Gase, wie Stickstoff, kann das Austreiben der flüchtigen Bestandteile gefördert werden. Zweckmäßigerweise wird die Temperatur mit fortschreitender Umsetzung gesteigert. Reste an flüchtigen Bestandteilen können durch Unterdruck entfernt werden. Das erhaltene Gemisch aus Bis-amiden und Paraffinen, das die Bis-amide in besonders feiner Verteilung enthält, kann unmittelbar weiter verarbeitet werden.

Das Aufbringen des geschmolzenen Entschäumergemisches (II) auf das körnige Trägermaterial (I) kann nach an sich bekannten Verfahren erfolgen, beispielsweise durch sukzessives Zumischen, insbesondere als Spray, zu dem Trägerkorn. Das Trägermaterial wird dabei durch Mischorgane oder durch Fluidisierung in lebhafter Bewegung gehalten, um eine gleichmäßige Beladung der Trägerkörner zu gewährleisten. Die dafür verwendeten Sprühmischer können kontinuierlich oder diskontinuierlich betrieben werden. Die zu versprühende Schmelze weist zweckmäßigerweise eine Temperatur von 80 bis 160 °C, insbesondere von 100 bis 120 °C auf. Eine vorherige Erwärmung des Trägermaterials auf 80 bis 120 °C, vorzugsweise 90 bis 110 °C kann vorteilhaft sein, um ein gleichmäßig imprägniertes, agglomeratfreies Material zu erhalten. Nach dem Imprägnieren der Körner wird das Behandlungsgut abgekühlt, z. B. mit strömender Luft in der Wirbelschicht, worauf es sofort weiterverarbeitet, beispielsweise dem Wasch- oder Reinigungsmittelgranulat zugemischt werden kann.

Die Herstellung des Schaumregulierungsmittels kann auch in der Weise erfolgen, daß man das Trägersalz (I) in Wasser löst und das Entschäumergemisch (II) darin dispergiert und diesen Slurry anschließend sprühtrocknet. Zur Stabilisierung der Dispersion empfiehlt sich der Zusatz eines wasserlöslichen, nichttensidischen Dispersionsstabilisators in Form eines quellfähigen Polymeren. Beispiele hierfür sind Celluloseether, wie Carboxymethylcellulose, Methylcellulose, Homo- und Copolymere von ungesättigten Carbonsäuren, wie Acrylsäure, Maleinsäure und copolymerisierbaren Vinylverbindungen, wie Vinylether, Acrylamid und Ethylen. Der Zusatz an polymeren Dispersionsstabilisatoren beträgt vorzugsweise 1 bis 5 Gewichtsprozent, bezogen auf das Mittel. Der Wassergehalt des Slurries kann je nach Art beziehungsweise Löslichkeit des Trägersalzes 30 bis 60 Gewichtsprozent betragen. Das Sprühtrocknen der Dispersion kann in bekannter Weise in Sprühtürmen mittels heißer, in Gleichstrom oder Gegenstrom geführter Trockengase erfolgen.

Je nach Porösität des Trägermaterials wird ein Gehalt von 2 bis 30 Gew.-%, vorzugsweise 5 bis 20 Gew.-% Entschäumergemisch, bezogen auf Endprodukt, eingestellt.

Die Einsatzmengen des granularen Schaumregulierungsmittels richten sich nach dem Gehalt an wirksamem Entschäumergemisch (II) und nach der Menge und der Schaumaktivität der in den Wasch- und Reinigungsmitteln enthaltenen Tenside. In Haushaltswaschmitteln üblicher Zusammensetzung, d. h. solchen, die zwischen 3 und 10 Gew.-% an schaumaktiven Sulfonat- bzw. Sulfat-Tensiden und ggf. noch an nichtionische Tenside enthalten, kommt man in aller Regel mit Zusätzen von weniger als 1 %, bezogen auf Schaumregulierungsmittel (II), vielfach mit 0,1 bis 0,3 % aus. Die Einsatzmengen liegen damit deutlich unter denen, die nach den Lehren von EP 0 087 233 hergestellt und verwendet werden und bewegen sich damit in der Größenordnung hochwirksamer Silikonentschäumer, die jedoch erheblich aufwendiger sind und verschiedene Nachteile aufweisen, nämlich eine mangelnde Wirkungskonstanz bei längerer Lagerung und die Eigenschaft, das Behandlungsgut oberflächlich zu hydrophobieren. Die erfindungsgemäßen Mittel sind hingegen auch nach längerer Lagerung im Gemisch mit Wasch- und Reinigungsmitteln unverändert wirksam und zeigen keine Hydrophobierungseffekte.

### Beispiele

Die folgenden Angaben beziehen sich, soweit nicht anders angegeben, auf Gewichtsprozent.

### Beispiel 1

10 % Vaseline (Petrolatum A),
34 % Hartparaffin (Terhell^{(R)} 4444),
44 % Mikrokristallinwachs (Witcodur^{(R)}272),
12 % N,N'-Bis-myristoyl-ethylendiamin
wurden in einer Stickstoffatmosphäre durch Erhitzen auf 150 °C aufgeschmolzen. Durch Abkühlen der Schmelze auf 110 °C unter gleichzeitigem intensiven Mischen mittels eines Turborührers wurde bewirkt, daß das auskristallisierende Bis-amid eine Teilchengröße von nicht mehr als 10 µm aufwies. 10 Gewichtsteile des flüssigen Gemisches wurden auf 90 Gewichtsteile eines sprühgetrockneten auf 110 °C vorgeheizten Natriumsulfats (Litergewicht 450 g, Korngröße 0,2 bis 0,6 mm) unter gleichzeitigem mechanischen Durchmischen aufgesprüht.

Das aus Vaseline, Hartparaffin und Mikrowachs bestehende Gemisch zeigte folgenden Schmelzverlauf (DTA):

| °C | % flüssig | % fest |
|---|---|---|
| - 20 | 0 | 100 |
| 0 | 1 | 99 |
| 25 | 18 | 82 |
| 50 | 62 | 38 |
| 75 | 97,3 | 2,7 |
| 85 | 100 | 0 |

### Beispiel 2

Ein 1:1-Gemisch aus Paraffin und Mikrokristallinwachs zeigte bei der DTA folgenden Schmelzverlauf:

| °C | % flüssig | % fest |
|---|---|---|
| - 20 | 0 | 100 |
| 0 | 0,5 | 99,5 |
| 25 | 12,5 | 87,5 |
| 50 | 55,2 | 44,8 |
| 75 | 95,3 | 4,7 |
| 85 | 100 | 0 |

88 Gewichtsprozent des aufgeschmolzenen Gemisches wurden unter Zusatz von 12 % Bis-stearoyl-ethylendiamin bei 80 °C mittels einer Kolloidmühle solange vermahlen und homogenisiert, bis 95 % des Bis-amids eine Korngröße unter 10 µm und nicht mehr als 5 % eine Korngröße unter 20 µm aufwies. 6 Gewichtsprozent des Gemisches wurden in einem wäßrigen Slurry dispergiert, der 58 Gewichtsprozent Natriumsulfat und 2 Gewichtsprozent Na-Carboxymethylcellulose enthielt. Dieses Gemisch wurde in einem Zerstäubungsturm über Düsen versprüht und mittels im Gegenstrom geführten Verbrennungsgasen sprühgetrocknet. Das von Feinanteilen und Grobkorn befreite Sprühprodukt wies eine Korngröße von 0,3 bis 0,8 mm und ein Litergewicht von 450 g auf.

### Beispiel 3

In 880 g einer auf 100 °C erwärmten Paraffinschmelze gemäß Beispiel 1 wurden 120 g Stearinsäure (0,42 Mol), 13,9 g Ethylendiamin (0,23 Mol entsprechend einem 10 %igen Überschuß) und 3,5 g p-Toluolsulfonsäure (0,021 Mol entsprechend 5 Mol-%, bezogen auf Bis-amid) dispergiert. Unter Einleiten von Stickstoff wurde die Temperatur innerhalb einer Stunde unter ständigem Durchmischen und Abführen des Reaktionswassers auf 150 °C erhöht. Nach weiterem einstündigen Erhitzen bei 150 °C unter Vakuum (zunächst 100 mbar, abschließend 1 mbar) wurde das Gemisch schnell auf 120 °C abgekühlt und auf sprühgetrocknetes Natriumsulfat entsprechend den Angaben in Beispiel 1 aufgesprüht, so daß das Endprodukt 10 Gewichtsprozent des Entschäumergemisches enthält.

Das Entschäumergemisch selbst enthielt ca. 11,5 % an Bis-amid und 0,6 % an nicht näher identifizierten Reaktionsprodukten aus Stearinsäure, Diamin und Toluolsulfonsäure.

Die anwendungstechnische Prüfung der Mittel erfolgte in einer handelsüblichen Waschmaschine mit horizontal gelagerter Trommel, die mit 3 kg sauberen Baumwolltextilien beschickt wurde. Die Frontscheibe der Maschine war oberhalb des Flüssigkeitsniveaus in 4 gleiche Abschnitte unterteilt. Die im Folgenden angegebenen Schaumnoten bedeuten:
0 = kein Schaum
1 = Schaumhöhe 1/4
2 = Schaumhöhe 1/2
3 = Schaumhöhe 3/4
4 = Schaumhöhe 4/4
5 = Überschäumen
Die Zusammensetzung des eingesetzten Waschmittels ist der Tabelle 1 zu entnehmen. Die Abkürzung EO steht für Mol angelagertes Ethylenoxid, TPP für Tripolyphosphat. Die "Salze" bestehen aus Na-Perborat, Na-Silikat und Na-Sulfat einschließlich des im Trägermaterial enthaltenen Natriumsulfats.

Sämtliche Entschäumerproben reagierten in 1 %iger wäßriger Lösung neutral.

| | Gew.-% |
|---|---|
| Na-Dodecylbenzolsulfonat | 8,5 |
| ethoxylierter Talgalkohol 5 EO | 3,0 |
| ethoxylierter Talgalkohol 10 EO | 1,5 |
| Seife (Talg/Cocos) | 1,5 |
| Na-Carboxymethylcellulose | 1,0 |
| Na-TPP | 18,0 |
| Zeolith NaA | 20,0 |
| Sequestrierungsmittel | 0,5 |
| Salze, Wasser, Entschäumer | Rest |

Die Waschmittelkonzentration betrug 10 g/l. Es wurde Leitungswasser vom Härtegrad 16 °dH (160 mg CaO/l) verwendet. Die Waschmaschine wurde in Betrieb genommen (sogen. Normalprogramm ohne Vorwäsche) und die Schaumhöhe in Abhängigkeit von der Temperatur abgelesen. Die Ergebnisse sind in der folgenden Tabelle 2 zusammengestellt. Die Angabe "Gewichtsprozent Entschäumer" bezieht sich auf die Menge an eingesetzter Wirksubstanz, d.h. Trägersalze blieben außer Betracht.

### Vergleichsversuche

A) Beispiel 1 wurde wiederholt, jedoch der Entschäumer auf das sprühgetrocknete Waschmittel gesprüht und zwar in Anteilen von 0,2 und 0,5 Prozent. Eine zweite Serie von Vergleichsproben sowie Proben der Waschmittel 4 und 5 wurden 6 Wochen bei 30 °C gelagert.
B) Beispiel 2 wurde wiederholt, jedoch wurde das Bis-amid lediglich in der Paraffinschmelze dispergiert und nicht vermahlen. Die Korngröße des Bis-amides lag im Bereich von 20 bis 60 µm mit einem Maximum bei 30 bis 40 µm.
c) Es wurde ein Entschäumer gemäß Vergleichsversuch (B) hergestellt, jedoch anstelle der Mikrowachs-Paraffin-Mischung die gleiche Menge Vaseline (Petrolatum) eingesetzt. Ein Vermahlen des Bis-amides unterblieb ebenfalls.

Die Ergebnisse zeigen, daß die erfindungsgemäßen Mittel auch bei geringen Einsatzmengen von 0,1 bis 0,2 %, bezogen auf Schauminhibitor-Gemisch, ein ausgewogenes Schaumverhalten besitzen. Die Vergleichsproben wirken erst in sehr viel höherer Konzentration und verlieren bei der Lagerung einen Teil ihrer Wirkung. Eine grobe Verteilung der Bis-amide bewirkt ebenfalls einen Rückgang der Entschäumerwirkung.

| | Entschäumer gemäß Beispiel | % | Schaumnoten bei °C | | | |
|---|---|---|---|---|---|---|
| | | | 30° | 50° | 70° | 90° |
| 1 | 1 | 0,1 | 2 | 2 | 2 | 2,5 |
| 2 | | 0,2 | 1,5 | 1 | 1 | 2 |
| 3 | | 0,5 | 0 | 0 | 0 | 1 |
| 4 | 2 | 0,1 | 2,5 | 2 | 2 | 2 |
| 5 | | 0,2 | 1,5 | 1 | 1 | 1 |
| 6 | | 0,5 | 0 | 0 | 0 | 0,5 |
| 7 | 3 | 0,1 | 1 | 0,5 | 0,5 | 1 |
| 8 | | 0,2 | 0 | 0 | 0 | 0,5 |
| 9 | A | 0,1 | 5 | 5 | 5 | 5 ** |
| 10 | | 0,2 | 4 | 4 | 4 | 5 ** |
| 11 | | 0,5 | 2 | 3 | 3 | 4 |
| 12 | 1 gelagert | 0,2 | 1 | 1 | 1 | 2 |
| 13 | | 0,5 | 0 | 0 | 0 | 1 |
| 14 | A gelagert | 0,2 | 5 | 5 | 5 | 5 ** |
| 15 | | 0,5 | 4 | 4 | 4 | 5 ** |
| 16 | B | 0,5 | 4 | 3 | 4 | 5 * |
| 17 | C | 0,5 | 5 | 5 | 5 | 5 * |

| | | | | | | |
|---|---|---|---|---|---|---|
| * Flottenverluste bis 100 g | | | | | | |
| ** erhebliche Flottenverluste über 100 g | | | | | | |

## Patentansprüche

1. Zur Verwendung in Wasch- und Reinigungsmtteln geeignetes, rieselfähiges Schaumregulierungsmittel, bestehend aus
(I) einem wasserlöslichen, körnigen, tensidfreien, Trägermaterial und
(II) einem adsorbierten Entschäumergemisch, das frei ist von Siloxanpolymeren und emulgierend beziehungsweise dispergierend wirkenden Tensiden und ein homogenes Gemisch folgender Bestandteile darstellt:
(a) 5 bis 60 Gewichtsprozent eines Weich- oder Hartparaffins beziehungsweise deren Gemisches, das ein wenig ausgeprägtes Kristallisationsverhalten zeigt,
(b) 20 bis 90 Gewichtsprozent mikrokristallinen Paraffinwachses, wobei die nach der Differential-Thermo-Analyse (DTA) bestimmten Anteile an flüssigen Bestandteilen in dem Gemisch aus (a) und (b) bei -15 °C 0 %, bei 0 °C 0 % bis 5 %, bei 25 °C 2 % bis 25 %, bei 50 °C 20 % bis 80 %, bei 75 °C 80 % bis 100 % und oberhalb 90 °C 100 % betragen sollen,
(c) 5 bis 20 Gewichtsprozent eines von C₂₋₇-Diaminen und gesättigten C₁₂₋₂₂-Fettsäuren abgeleiteten Diamids, das in feinverteilter Form vorliegt und eine Teilchengröße von weniger als 50 µm aufweist, wobei mindestens 90 % der Teilchen kleiner als 30 µm sind.

2. Mittel nach Anspruch 1, worin das Trägermaterial aus sprühgetrocknetem Natriumsulfat mit einer Korngröße von 0,1 bis 1,6 mm und einem Schüttgewicht von 200 bis 700 g/l besteht.

3. Mittel nach Anspruch 1, worin das Gemisch der Bestandteile (a) und (b) nach der DTA-Bestimmungs-Methode folgende Flüssiganteile aufweisen: bei 0 °C 0 % bis 2 %, bei 25 °C 2 % bis 15 %, bei 50 °C 30 % bis 70 %, bei 75 °C 95 % bis 99 %, oberhalb 90 °C 100 %.

4. Mittel nach Anspruch 1 bis 3, worin der Bestandteil (c) aus Bis-amiden des Ethylendiamins mit gesättigten C₁₄₋₁₈-Fettsäuren besteht.

5. Mittel nach Anspruch 1 bis 4, worin der Bestandteil (c) aus Partikeln mit einer Größe unter 20 µm besteht, wobei mindestens 75 % der Partikel kleiner als 10 µm sind.

6. Verfahren zur Herstellung der Mittel gemäß Anspruch 1 bis 5, dadurch gekennzeichnet, daß man den Bestandteil (c) in einer die Bestandteile (a) und (b) enthaltenden Schmelze dispergiert, auf die angegebene Korngröße vermahlt und das so erzeugte Entschäumergemisch (II) auf das Trägermaterial (I) aufbringt.

7. Verfahren zur Herstellung der Mittel nach Anspruch 1 bis 5, dadurch gekennzeichnet, daß man ein Gemisch der Bestandteile (a), (b) und (c) auf eine oberhalb des Schmelzbereiches des Bestandteils (c) liegende Temperatur erhitzt, unter Homogenisieren auf eine Temperatur unterhalb des Schmelzbereiches des Bestandteils (c) abkühlt und das so erzeugte Entschäumergemisch (II) auf das Trägermaterial (I) aufbringt.

8. Verfahren zur Herstellung der Mittel nach Anspruch 1 bis 5, dadurch gekennzeichnet, daß man in der Schmelze der Bestandteile (a) und (b) die zur Herstellung der Bis-amide geeigneten Diamine und Fettsäuren beziehungsweise Fettsäurederivate dispergiert, in Gegenwart acider Katalysatoren die Amidierung vornimmt und das so erzeugte Entschäumergemisch (II) auf das Trägermaterial (I) aufbringt.

9. Verfahren nach Anspruch 6 bis 8, dadurch gekennzeichnet, daß man die Schmelze aus den Bestandteilen (a), (b) und (c) auf das in Bewegung gehaltene, vorzugsweise vorgewärmte Trägerkorn (I) aufsprüht.

10. Verfahren nach Anspruch 6 bis 8, dadurch gekennzeichnet, daß man in einer wäßrigen Lösung der Trägersalze (I) das Entschäumergemisch (II) unter Zusatz eines in Wasser löslichen bzw. quellfähigen Polymeren dispergiert und die Dispersion sprühtrocknet.

11. Entschäumergemisch, das frei ist von Siloxanpolymeren und emulgierend beziehungsweise dispergierend wirkenden Tensiden und ein homogenes Gemisch folgender Bestandteile darstellt:
(a) 5 bis 60 Gewichtsprozent eines Weich- oder Hartparaffins beziehungsweise deren Gemisches, das ein wenig ausgeprägtes Kristallisationsverhalten zeigt,
(b) 20 bis 90 Gewichtsprozent mikrokristallinen Paraffinwachses, wobei die nach der Differential-Thermo-Analyse (DTA) bestimmten Anteile an flüssigen Bestandteilen in dem Gemisch aus (a) und (b) bei -15 °C 0 %, bei 0 °C 0 % bis 5 %, bei 25 °C 2 % bis 25 %, bei 50 °C 20 % bis 80 %, bei 75 °C 80 % bis 100 % und oberhalb 90 °C 100 % betragen sollen,
(c) 5 bis 20 Gewichtsprozent eines von C₂₋₇-Diaminen und gesättigten C₁₂₋₂₂-Fettsäuren abgeleiteten Diamids, das in feinverteilter Form vorliegt und eine Teilchengröße von weniger als 50 µm aufweist, wobei mindestens 90 % der Teilchen kleiner als 30 µm sind.

## Claims

1. A free-flowing foam regulator suitable for use in detergents and cleaning preparations, consisting of
(I) a water-soluble, granular surfactant-free support material and
(II) an adsorbed foam inhibitor mixture which is free from siloxane polymers and emulsifying or dispersing surfactants and which consists of a homogeneous mixture of the following constituents:
(a) 5 to 60% by weight of a soft or hard paraffin with barely pronounced crystallization behaviour or a mixture of such paraffins,
(b) 20 to 90% by weight of a microcrystalline paraffin wax,
the proportions of liquid constituents in the mixture of (a) and (b), as determined by differential thermal analysis (DTA), having to amount to 0% at -15°C, to between 0 and 5% at 0°C, to between 2 and 25% at 25°C, to between 20 and 80% at 50°C, to between 80 and 100% at 75°C and to 100% above 90°C,
(c) 5 to 20% by weight of a diamide derived from C₂₋₇ diamines and saturated C₁₂₋₂₂ fatty acids which is present in fine-particle form and which has a particle size of less than 50 µm, at least 90% of the particles being smaller than 30 µm.

2. A foam regulator as claimed in claim 1 in which the support material consists of spray-dried sodium sulfate having a particle size of 0.1 to 1.6 mm and an apparent density of 200 to 700 g/l.

3. A foam regulator as claimed in claim 1, in which the proportions of liquid constituents in the mixture of (a) and (b), as determined by DTA, are as follows: 0 to 2% at 0°C, 2 to 15% at 25°C, 30 to 70% at 50°C, 95 to 99% at 75°C, 100% above 90°C.

4. A foam regulator as claimed in claims 1 to 3, in which constituent (c) consists of bisamides of ethylene diamine and saturated C₁₄₋₁₈ fatty acids.

5. A foam regulator as claimed in claims 1 to 4, in which constituent (c) consists of particles below 20 µm in size, at least 75% of the particles being smaller than 10 µm.

6. A process for the production of the foam regulator claimed in claims 1 to 5, characterized in that constituent (c) is dispersed in a melt containing constituents (a) and (b), ground to the particle size indicated and the foam inhibitor mixture (II) thus produced is applied to the support material (I).

7. A process for the production of the foam regulator claimed in claims 1 to 5, characterized in that a mixture of constituents (a), (b) and (c) is heated to a temperature above the melting range of constituent (c), cooled with homogenization to a temperature below the melting range of constituent (c) and the foam inhibitor mixture (II) thus produced is applied to the support material (I).

8. A process for the production of the foam regulator claimed in claims 1 to 5, characterized in that the diamines and fatty acids or fatty acid derivatives suitable for the preparation of the bisamides are dispersed in a melt of constituents (a) and (b), amidation is carried out in the presence of acidic catalysts and the foam inhibitor mixture (II) thus produced is applied to the support material (I).

9. A process as claimed in claims 6 to 8, characterized in that a melt of constituents (a), (b) and (c) is sprayed onto the preferably preheated support particles (I) which are kept in motion.

10. A process as claimed in claims 6 to 8, characterized in that the foam inhibitor mixture (II) is dispersed in an aqueous solution of the support salts (I) in the presence of a polymer soluble or swellable in water and the dispersion is spray-dried.

11. A foam inhibitor mixture which is free from siloxane polymers and emulsifying or dispersing surfactants and which is formed by a homogeneous mixture of the following constituents:
(a) 5 to 60% by weight of a soft or hard paraffin with barely pronounced crystallization behaviour or a mixture of such paraffins,
(b) 20 to 90% by weight of a microcrystalline paraffin wax,
the proportions of liquid constituents in the mixture of (a) and (b), as determined by differential thermal analysis (DTA), having to amount to 0% at -15°C, to between 0 and 5% at 0°C, to between 2 and 25% at 25°C, to between 20 and 80% at 50°C, to between 80 and 100% at 75°C and to 100% above 90°C,
(c) 5 to 20% by weight of a diamide derived from C₂₋₇ diamines and saturated C₁₂₋₂₂ fatty acids which is present in fine-particle form and which has a particle size of less than 50 µm, at least 90% of the particles being smaller than 30 µm.

## Revendications

1. Agent régulateur de mousse, coulant, destiné à être utilisé dans des agents de lavage et de nettoyage, se composant
(I) d'un support exempt de tensioactif, granuleux et soluble dans l'eau et
(II) d'un mélange antimousse adsorbé, qui est exempt de polymères de siloxane et de surfactifs à action émulsifiante ou dispersante et représente un mélange homogène des constituants ci-après:
(a) 5 à 60 pour cent en poids d'une paraffine molle ou dure ou d'un mélange de celles-ci, qui présente un comportement de cristallisation peu marqué,
(b) 20 à 90 pour cent en poids de cire de paraffine microcristalline, les fractions déterminées selon la thermoanalyse différentielle (DTA) en constituants liquides dans le mélange constitué de (a) et de (b) devant atteindre à - 15 °C 0 %, à 0 °C 0 à 5 %, à 25 °C 2 à 25 %, à 50 °C 20 à 80 %, à 75 °C 80 à 100 % et au-delà de 90 °C 100 %,
(c) 5 à 20 pour cent en poids d'un diamide dérivé de diamines de C₂ à C₇ et d'acides gras saturés de C₁₂ à C₂₂, qui est présent sous forme finement dispersée et présente une grosseur de grain inférieure à 50 µm, 90 % au moins des particules étant inférieures à 30 µm,

2. Agent selon la revendication 1, caractérisé en ce que le support est constitué de sulfate de sodium séché par pulvérisation avec une grosseur de grain de 0,1 à 1,6 mm et une densité en vrac de 200 à 700 g/l.

3. Agent selon la revendication 1, caractérisé en ce que le mélange des constituants (a) et (b) présente selon la méthode de détermination DTA les fractions liquides ci-après: à 0° C 0 à 2 %, à 25 °C 2 à 15 %, à 50 °C 30 à 70 %, à 75 °C 95 à 99 %, au-delà de 90 °C 100 %.

4. Agent selon les revendications 1 à 3, caractérisé en ce que le constituant (c) se compose de bis-amides d'éthylènediamine avec des acides gras saturés de C₁₄ à C₁₈.

5. Agent selon les revendications 1 à 4, caractérisé en ce que le constituant (c) se compose de particules dont la grosseur est inférieure à 20 µm, 75 % au moins des particules étant inférieures à 10 µm.

6. Procédé de fabrication des agents selon les revendications 1 à 5, caractérisé en ce que l'on disperse le constituant (c) dans une masse fondue contenant les constituants (a) et (b), que l'on moud à la grosseur de grain spécifiée et que l'on applique le mélange antimousse ainsi produit (II) sur le support (I).

7. Procédé de fabrication des agents selon les revendications 1 à 5, caractérisé en que l'on chauffe un mélange des constituants (a), (b) et (c) à une température située au-delà du régime de fusion du constituant (c), qu'on le refroidit en homogénéisant à une température située en-deçà du régime de fusion du constituant (c) et que l'on applique le mélange antimousse (II) ainsi produit sur le support (I).

8. Procédé de fabrication des agents selon les revendications 1 à 5, caractérisé en ce que l'on disperse dans la masse fondue des constituants (a) et (b) les diamines et les acides gras ou les dérivés d'acides gras appropriés à la fabrication des bis-amides, que l'on procède à l'amidification en présence de catalyseurs acides et que l'on applique le mélange antimousse (II) ainsi produit sur le support (I).

9. Procédé selon les revendications 6 à 8, caractérisé en ce que l'on pulvérise la masse fondue des constituants (a), (b) et (c) sur le granulé porteur (I) maintenu en mouvement, de préférence préchauffé.

10. Procédé selon les revendications 6 à 8, caractérisé en ce que l'on disperse le mélange antimousse (II) dans une solution aqueuse des sels porteurs (I), en ajoutant un polymère soluble ou susceptible de gonfler dans l'eau et en ce que l'on sèche la dispersion par pulvérisation.

11. Mélange antimousse exempt de polymères de siloxane et de surfactifs à action émulsifiante ou dispersante et représentant un mélange homogène des constituants ci-après:
(a) 5 à 60 pour cent en poids d'une paraffine molle ou dure ou d'un mélange de celles-ci, qui présente un comportement de cristallisation peu marqué,
(b) 20 à 90 pour cent en poids de cire de paraffine microcristalline, les fractions déterminées selon la thermoanalyse différentielle (DTA) en constituants liquides dans le mélange constitué de (a) et de (b) devant atteindre à - 15 °C 0 %, à 0 °C 0 à 5 %, à 25 °C 2 à 25 %, à 50 °C 20 à 80 %, à 75 °C 80 à 100 % et au-delà de 90 °C 100 %,
(c) 5 à 20 pour cent en poids d'un diamide dérivé de diamines de C₂ à C₇ et d'acides gras saturés de C₁₂ à C₂₂, qui est présent sous forme finement dispersée et présente une grosseur de grain inférieure à 50 µm, 90 % au moins des particules étant inférieures à 30 µm.
